# EUROPEAN PATENT APPLICATION

(11) **EP 2 001 225 A2**
(43) Date of publication of application: **10.12.2008**
(21) Application number: 08157303.2
(22) Date of filing: 30.05.2008
(51) Int. Cl.: H04N 5/45

(54) **Multichannel Display Method and System for Digital Broadcast-Enabled Terminal**

(30) Priority: 08.06.2007 KR 20070056245
(71) Applicant: Samsung Electronics Co., Ltd., Suwon-si Gyeonggi-do (KR)
(72) Inventor: Kim, Hyun Sool Samsung Electronics Co., Ltd., Suwon-si, Gyeonggi-do (KR); Baek, Joon Sang Samsung Electronics Co., Ltd., Suwon-si, Gyeonggi-do (KR)
(74) Representative: Harrison Goddard Foote

(57) **Abstract**

A multichannel picture display method and system for a digital broadcast-enabled terminal is provided for receiving multiple service channels and displaying broadcast data of the multiple service channels simultaneously in response to a channel navigation request. A method for outputting broadcast data in a terminal according to the present invention includes outputting first broadcast data received through a currently selected service channel in a broadcast playback mode, receiving at least one second broadcast data through adjacent service channels of the currently selected service channel while outputting the first broadcast data, composing a multichannel screen comprising a main preview window for outputting a corresponding broadcast data received through a currently selected service channel and at least one sub preview windows for outputting at least one corresponding broadcast data received through the adjacent service channels, if a channel navigation is requested, and outputting the first broadcast data in any one of the at least one sub preview windows and any one of the at least one second broadcast data in the main preview window.

## Description

### BACKGROUND OF THE INVENTION

### 1. Field of the Invention:

The present invention relates to a digital broadcast-enabled terminal. More particularly, the present invention relates to a multichannel display method and system for a digital broadcast-enabled terminal that is capable of receiving multiple service channels and presenting broadcast data of the service channels simultaneously in response to a channel navigation key input.

### 2. Description of the Related Art:

Typically, a digital broadcast system supports the mobile reception of digital broadcast signals enabling a user to enjoy high quality video and audio using a digital broadcast receiver while on the move.

The digital broadcast receiver can be implemented in the form of an in-vehicle broadcast receiver, a dedicated handheld broadcast receiver, a broadcast function-enabled mobile phone, or a peripheral device of a personal computer.

Recently, digital broadcast receivers are emerging with advanced display functions such as Picture-In-Picture (PIP) and Twin Picture. Such multipicture display functions enable the broadcast receiver to present additional information (e.g., a navigation application image) while displaying the television program received through a currently selected service channel. The PIP is a function to display a primary picture in the full display screen and a secondary picture in a small window positioned at an area on the display screen. In the meantime, the Twin Picture function divides the display screen into two display parts identical in size and presents the primary and secondary pictures on the corresponding display parts such that one of the display parts are selectively displayed in the full screen view.

Accordingly, it would be desirable for there to be a system and method that utilizes the advanced display functions of digital broadcast receivers.

### SUMMARY OF THE INVENTION

An aspect of the present invention is to provide a multichannel display method and system for a digital broadcast-enabled terminal that is capable of simultaneously receiving multiple broadcast service channels.

Also, the present invention provides a multichannel display method and system for a digital broadcast-enabled terminal that is capable of simultaneously displaying multiple pictures received through different service channels on a signal display screen.

Also, the present invention provides a multichannel display method and system for a digital broadcast-enabled terminal that is capable of facilitating channel switching by receiving and simultaneously displaying an currently selected service channel and its adjacent service channels.

In accordance with an exemplary embodiment of the present invention, a method for outputting broadcast data in a terminal is provided. The method includes outputting broadcast data in a terminal according to the present invention includes outputting first broadcast data received through a currently selected service channel in a broadcast playback mode, receiving at least one second broadcast data through adjacent service channels of the currently selected service channel while outputting the first broadcast data, composing a multichannel screen comprising a main preview window for outputting a corresponding broadcast data received through a currently selected service channel and at least one sub preview windows for outputting at least one corresponding broadcast data received through the adjacent service channels, if a channel navigation is requested, and outputting the first broadcast data in any one of the at least one sub preview windows and any one of the at least one second broadcast data in the main preview window.

In accordance with another exemplary embodiment of the present invention, a method for outputting broadcast data in a terminal is provided. The method includes receiving broadcast data of a currently selected service channel and at least one adjacent service channel simultaneously, receiving a channel navigation request, composing a multichannel screen having a preset number of preview windows, outputting the broadcast data of the service channels shifted in a direction indicated by the channel navigation request in corresponding preview windows, outputting, when the channel navigation request is input again, the broadcast data of the service channels shifted in a direction indicated by the channel navigation request, and outputting, if a preset time has expired without any request input, the broadcast data presented in a currently selected preview window among preview windows.
In accordance with another exemplary embodiment of the present invention, a digital broadcast apparatus of a terminal is provided. The apparatus includes a digital broadcast reception unit for receiving broadcast data of a currently selected service channel and at least one adjacent service channel and for outputting the broadcast data simultaneously, a memory unit for storing an application controlling reception of the currently selected and adjacent service channels and channel switching, a display unit for outputting the broadcast data of the currently selected service channel and for displaying a multichannel screen comprising a plurality of preview windows outputting the broadcast data of the service channels simultaneously in response to a channel navigation request, and a control unit for controlling the reception of the service channels and for controlling the simultaneous outputting of the broadcast data in response to the channel navigation request.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 is a block diagram illustrating a configuration of a terminal according to an exemplary embodiment of the present invention;

FIG. 2 is a block diagram illustrating a multichannel display system of a terminal according to an exemplary embodiment of the present invention;

FIG. 3 is a schematic block diagram illustrating a multichannel display method according to an exemplary embodiment of the present invention;

FIG. 4 is a diagram illustrating steps of a multichannel screen configuration procedure of a multichannel display method according to an exemplary embodiment of the present invention;

FIG. 5 is diagram illustrating steps of a multichannel screen configuration procedure of a multichannel display method according to another exemplary embodiment of the present invention;

FIGs. 6A and 6B are screen images illustrating steps of a multichannel screen configuration procedure of a multichannel display method according to another exemplary embodiment of the present invention; and

FIG. 7 is a flowchart illustrating a multichannel display method for a digital broadcast-enabled terminal according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the present invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and phrases used in the specification and appended claims are provided to enable a clear and consistent understanding of the detailed description and the claims. Unless otherwise noted, the terms and phrases are to be understood according to conventional usage by those skilled in the relevant art.

Exemplary embodiments of the present invention provide a multichannel display method and system for a digital broadcast-enabled terminal for facilitating service channel switching. In the multichannel display method and system of the exemplary embodiments of the present invention, the terminal displays adjacent service channel pictures as well as pictures from the currently selected service channel, simultaneously, in a channel navigation period such that the user can select a channel while viewing candidate service channel pictures, resulting in fast channel navigation and fast channel switching.

In the multichannel display method and system, the terminal receives the currently selected service channel together with at least one adjacent service channel. Accordingly, if a channel navigation request is input by the user, the terminal activates a multichannel screen having independent preview windows to display the pictures of the currently selected service channel and adjacent service channels in respective preview windows such that the user can quickly navigate service channels and select a specific channel.

In the multichannel display method and system of exemplary embodiments of the present invention, a terminal receives at least one switching-candidate service channel (e.g., previous and/or next service channel) together with the currently selected service channel for fast channel switching and displays the pictures of the currently selected and candidate service channels by simultaneously demultiplexing and A/V synchronizing the currently selected and candidate service channels. At this time, the currently selected service channel is processed such that its audio and video data are reproduced in synchronization with each other, and the candidate service is processed such that only its video data is reproduced. Since pictures of the currently selected and candidate service channels are displayed simultaneously, the user can acquire the information of the candidate service channels while enjoying the broadcast program on the currently selected service channel. Also, the service channel navigation is carried out while viewing the pictures of the previous and next service channels as well as the currently selected service channel, resulting in fast channel switching.

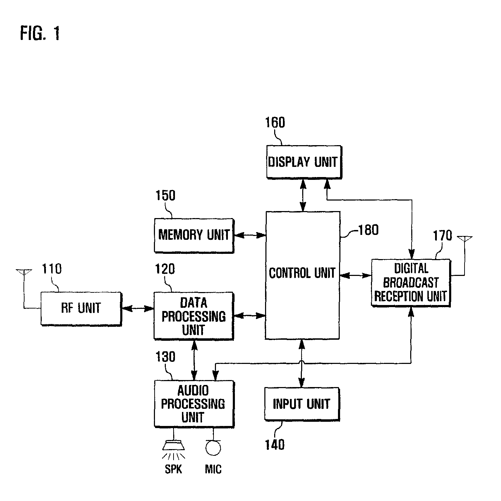

FIG. 1 is a block diagram illustrating a configuration of a terminal according to an exemplary embodiment of the present invention. Although a multichannel display system is described with a terminal, the present invention is not limited thereto.

Referring to FIG. 1, the terminal includes a Radio Frequency (RF) unit 110, a data processing unit 120, an audio processing unit 130, an input unit 140, a memory unit 150, a display unit 160, a digital broadcast reception unit 170, and a control unit 180.

The RF unit 110 is responsible for radio communication of the terminal. The RF unit 110 is configured to establish a communication channel with a mobile communication system in a preset communication protocol. The RF unit 110 includes an RF transmitter for up-converting and amplifying the transmission signal and an RF receiver for low-noise amplifying and down-converting the received signal.

The data processing unit 120 is responsible for processing audio data output by the audio processing unit 130, text data input through the input unit 140, and an RF signal received by the RF unit 110. The data processing unit may include a modem and a codec. The codec may include a data codec for processing packet data and an audio codec for processing an audio signal including voice.

The audio processing unit 130 processes the audio signal input from the data processing unit 120 and the digital broadcast reception unit 170 so as to output the audio signal through the speaker (SPK) in the form of audible sound and processes the audio signal input through a microphone (MIC) and transfers the processed audio signal to the data processing unit 120.

The input unit 140 receives various alphanumeric key inputs and function key inputs and transfers the key sequences corresponding to the key inputs to the control unit 180. The key inputs may correspond to actions requested by the user. The input unit 140 can be implemented with at least one of a touchpad, a keypad, a touchscreen, and a qwerty keyboard. The input unit 140 may include function keys for activating specific functions, such as navigation keys, volume keys, and hot keys. In particular, the input unit 140 generates key signals associated with the reception and playback of the digital broadcast data and transfers the key signals to the control unit 180. Also, the input unit 140 generates a channel switching key signal in the digital broadcast reception mode and transfers the channel switching key signal to the control unit 180.

The memory unit 150 stores programs associated with the multichannel display function and data saved by the user and received from a broadcast station. The data includes digital broadcast data, phonebook data, video data including still and motion pictures, and audio data including MP3 files. The programs include an application for controlling the reception of multiple broadcast service channels, the simultaneous display of multiple service channel pictures, and switches between service channels. The memory unit 150 may include at least one buffer for temporarily storing the application data generated while the application operates.

The display unit 160 displays screen images rendered by the application and displays information reflecting the user's key input and optional configuration functions. The display unit 160 can be implemented with a liquid crystal display (LCD), particularly with a touchscreen function. In this case, the display unit 160 acts as a part of the input unit 140. The display unit 160 also displays the broadcast picture received through at least one service channel. The display unit 160 is configured to display pictures of multiple service channels in response to a channel navigation request.

The digital broadcast reception unit 170 receives digital broadcast data on the service channels tuned by the user. In particular, the digital broadcast reception unit 170 is configured to receive the currently selected service channel and its adjacent service channels. The digital broadcast reception unit 170 demultiplexes the service channels, synchronizes the audio and video data of each service channel, and transfers the video data of the service channels to the display unit 160 such that the video data of the multiple service channels are displayed on the display screen simultaneously.

The control unit 180 controls general operations of the terminal and signaling between the internal units of the terminal. The control unit 180 controls the cooperation of the audio processing unit 130, input 140, memory unit 150, display unit 160, and digital broadcast reception unit 170. The control unit 180 may integrate the data processing unit 120.

In particular, the control unit 180 controls the digital broadcast reception unit 170 to receive multiple broadcast service channels. The control unit 180 controls the display unit 160 to display the picture of the service channel tuned in response to the user's request. The control unit 180 also controls the display unit 160 to simultaneously display the multiple pictures of the different service channels in response to a channel navigation request signal. The currently selected and adjacent service channels are changed simultaneously in response to the channel navigation request signal such that the pictures displayed on the corresponding preview windows are also switched. The operation of the control unit 180 is described in more detail in association with the operation of the digital broadcast reception unit 170.

Although the terminal of FIG. 1 is schematically illustrated, the configuration of the terminal is not limited thereto. For example, the terminal may include at least one of camera module, electronic accounting module, short range communication module, and other optional function modules. Also, the internal elements constituting the terminal can be omitted and replaced with equivalent functional elements depending on the functional design of terminal.

The terminal according to this embodiment can be any of mobile communication devices operating in various mobile communication standards, Portable Multimedia Player (PMP), MP3 player, digital broadcast receiver, Personal Digital Assistant (PDA), laptop and desktop computers, and other types of information and multimedia processing devices.

Now the operation of the above structured terminal is described in association of the multichannel display function. However, the preset invention is not limited to the following description and various changes may be made in form and details.

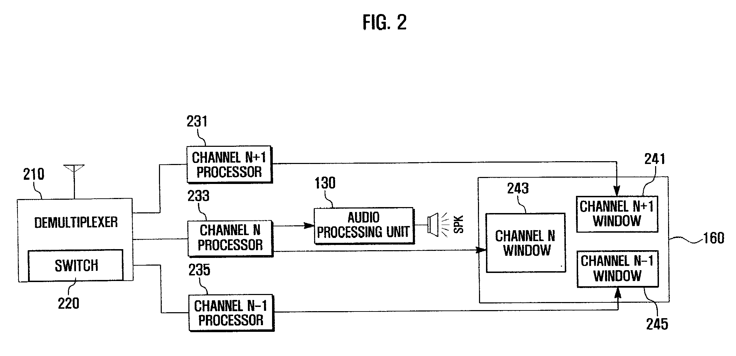

FIG. 2 is a block diagram illustrating a multichannel display system of a terminal according to an exemplary embodiment of the present invention.

Referring to FIG. 2, the multichannel display system of the terminal includes a demultiplexer 210, a channel N (primary channel) processor 233, a channel N-1 processor 235, and channel N+1 processor 231 that may be comprised by the digital broadcast reception unit 170. The multichannel display system further includes a channel N preview window 243, a channel N-1 preview window 241, and a channel N+1 preview window 245 that may be comprised by the display unit 160. The multichannel display system also include audio processing unit 130.

The demultiplexer 210 demultiplexes the service channels (three service channels in the embodiment) received through at least one antenna and outputs the broadcast data of the respective service channels to the channel processors 231, 233, and 235. The demultiplexer 210 includes a switch 220 for shifting service channels in response to a channel navigation signal under the control of the control unit 180. The switch 220 can be integrated with the demultiplexer 210 or implemented as a separate element. Also, the switch 220 can be implemented in the form of a software module.

Although not shown in FIG. 2, the demultiplexer 210 may include buffers for buffering the broadcast data to be input to the respective channel processors 231, 233, and 235 such that the processors 231, 233, and 235 receive the broadcast data regulated by the buffers.

A number of antennas can be determined depending on the configuration of the multichannel display system of the terminal.

The channel processors 231, 233, and 235 process the broadcast data input from the demultiplexer 210. In the case where the buffers are assigned for the respective channel processors 231, 233, and 235, broadcast data is input through the buffers.

Among the channel processors 231, 233, and 235, the channel N processor 233 is responsible for processing the broadcast data of the primary service channel, which is the currently selected playback service channel. The channel N processor 233 decodes the audio and video data from the primary service channel and outputs the audio data to the audio processing unit 130 and video data to the display unit 160. In particular, the video data is output through the channel N preview window 243 of the display unit 160 in the form of a preview picture. Here, "N" may indicate a channel number of the currently selected playback service channel.

The channel N+1 processor 231 is responsible for processing the broadcast data of an adjacent service channel (e.g., next service channel (channel N+1)) of the currently selected playback service channel (e.g., the channel N). The channel N+1 processor 231 decoding the audio and video data from the broadcast data received through the service channel N+1 and transfers the video data to the display unit 160. The channel N+1 processor 231 extracts video data such that the video data that is output through the channel N+1 preview window 241 of the display unit 160 in the form of a preview picture. The channel N+1 processor 231 can be configured to capture a specific image and output the captured image in the channel N+1 preview window 241 as a preview image.

The channel N-1 processor 235 is responsible for processing the broadcast data of an adjacent service channel (e.g., previous service channel (channel N-1)) of the currently selected playback service channel (e.g., the channel N). The channel N-1 processor 235 decodes the audio and video data from the broadcast data received through the service channel N-1 and transfers the video data to the display unit 160. The channel N-1 processor 235 extracts video data such that the video data that is output through the channel N-1 preview window 245 in the form of a preview picture. The channel N-1 processor 235 can be configured to capture a specific image and output the captured image in the channel N-1 preview window 245 as a preview image.

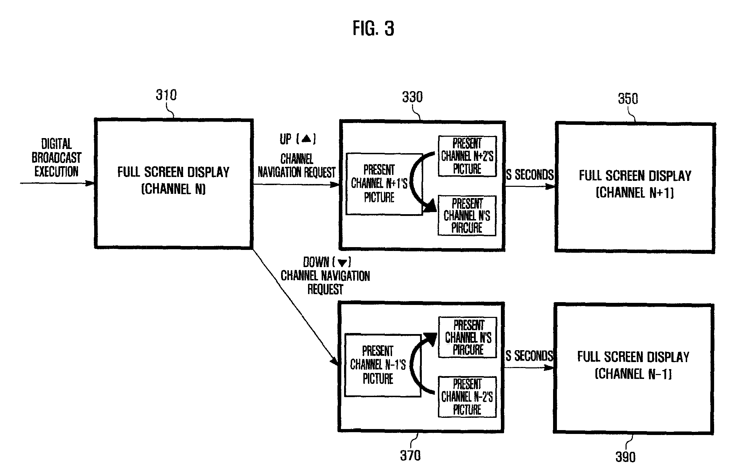

FIG. 3 is a schematic block diagram illustrating a multichannel display method according to an exemplary embodiment of the present invention.

Referring to FIG. 3, if a request for playing a digital broadcast program is input, such as by a key input, the control unit 180 checks the previously played service channel (channel N) and starts receiving the broadcast data on channel N such that the video data of channel N is displayed on the display unit in the full screen view (310).

If a channel up request is input while playing the broadcast data of channel N, the control unit 180 composes a multichannel screen to be displayed on the display unit 160. The multichannel screen is provided with multiple preview windows. In FIG. 3, three preview windows are provided for displaying the video data received through three service channels. The three preview windows comprise a main preview window and at least two sub preview windows (e.g., first and second preview windows).

Next, the control unit 180 controls such that the broadcast data (video data) received through the three service channels are displayed in the respective preview windows. At this time, the three service channels are shifted up in response to the channel up request such that channel N+1 becomes the primary service channel and channel N becomes one of the adjacent service channels and channel N+2 becomes another one of the adjacent service channels. Accordingly, the video data of the primary service channel N+1 is presented in the main preview window, the video data of the adjacent service channel N is presented in the first preview window and the video data of the adjacent service channel N+2 is presented in the second preview window (330). While the service channel video data is being displayed on the respective preview windows, the control unit 180 determines whether a channel navigation request or channel confirmation request is input within a preset time (S seconds). If no channel navigation request is input or a channel confirmation request is input in the preset time, the control unit 180 controls such that the video data of the service channel N+1, presented in the main preview window, is displayed in the full screen view (350).

In the meantime, if a channel down request is input while playing the broadcast data of channel N, the control unit 180 composes a multichannel screen including multiple preview windows. In FIG. 3 three preview windows are provided for displaying video data received through the three service channels.

Next, the control unit 180 controls such that the broadcast data (video data) received through the three service channels are displayed in the respective preview windows. At this time, the three service channels are shifted down in response to the channel down request such that channel N-1 becomes the primary service channel and channel N-2 becomes one of the adjacent service channels and channel N becomes another one of the adjacent service channels. Accordingly, the video data of the primary service channel N-1 is presented in the main preview window, the video data of the adjacent service channel N-2 is presented in the first preview window and the video data of the adjacent service channel N is presented in the second preview window (370). While the service channel video data is being displayed on the respective preview windows, the control unit 180 determines whether a channel navigation request or a channel confirmation request is input within a preset time (S seconds). If no channel navigation request is input or a channel confirmation request is input within the preset time, the control unit 180 controls such that the video data of the service channel N-1, presented in the main preview window, is displayed in the full screen view (390).

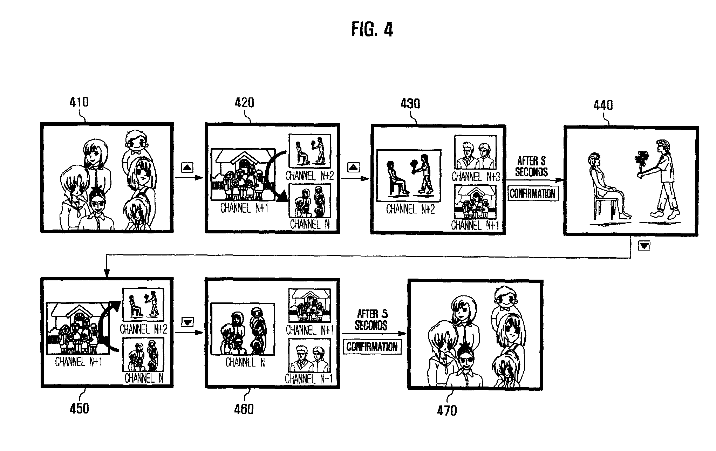

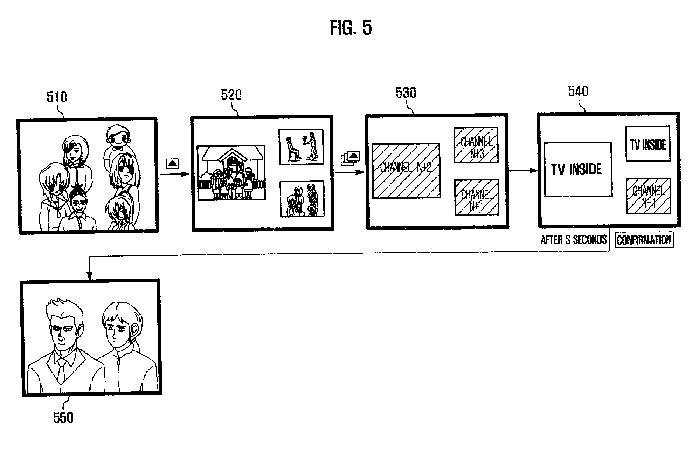

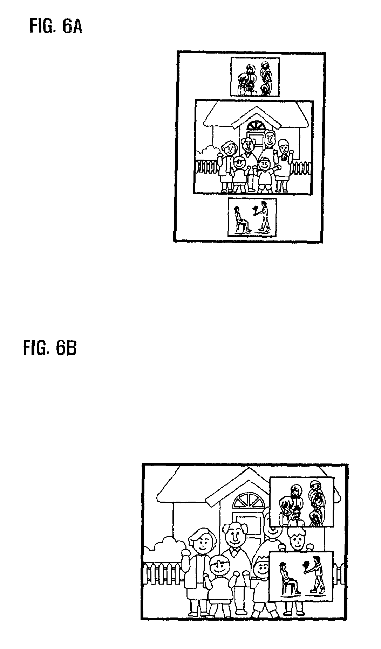

FIG. 4 is a diagram illustrating steps of a multichannel screen configuration procedure of a multichannel display method according to an exemplary embodiment of the present invention, FIG. 5 is diagram illustrating steps of a multichannel screen configuration procedure of a multichannel display method according to another exemplary embodiment of the present invention, and FiGs. 6A and 6B are screen images illustrating steps of a multichannel screen configuration procedure of a multichannel display method according to another exemplary embodiment of the present invention.

Referring to FIG. 4, the digital broadcast mode starts with displaying the video data of a requested service channel (channel N) in the full screen view (410). If a channel up or channel down request is input while displaying channel N's video data in the full screen view, the control unit 180 shifts the service channel in response to the channel up or down request. For example, if a channel up signal is input, the control unit 180 composes a multichannel screen with three preview windows and presents the video data of the newly selected service channel (channel N+1) in a main preview window and the video data of the previously selected service channel (channel N) and the next service channel (channel N+2) in the respective sub preview windows (e.g., first and second preview windows) (420).

In the screen image indicated by reference number 420, channel N+1 is the primary service channel that has been selected by shifting up by one channel from channel N, channel N+2 is a secondary service channel to be selected by shifting up by one channel from the primary service channel (channel N+1), and channel N is a secondary service channel to be selected by shifting down by one channel from the primary service channel (channel N+1).

The service channels of which video data are displayed in the main and sub preview windows are shifted in response to the navigation request, i.e. channel up or channel down request.

If the channel up request is input again while the multichannel screen image indicated by the reference number 420 is displayed, the multichannel screen image is configured as shown in the screen image indicated by the reference number 430 in the above described manner.

While displaying the multichannel screen on the display unit, the control unit 180 determines whether a channel navigation request or a channel confirmation request is input within a preset time (S seconds). If no channel navigation request is input or a channel confirmation request is input within the preset time, the control unit 180 controls such that the video data of channel N+2, presented in the main preview window, is displayed in the full screen view (440).

If a channel down request is input while displaying channel N+2's video data in the full screen view, the control unit 180 controls such that the main preview window of the multichannel screen is presenting channel N+1's video data and the sub preview windows are presenting the respective channel N's video data and channel N+2's video data, as shown in the screen image indicated by reference number 450. The screen image indicated by reference number 460 is of a multichannel screen rendered in response to the input of the channel down request again. Also, the screen image indicated by reference number 470 is of the full screen view rendered in response to the input of the channel confirm request or an expiration of the input time.

The exemplary sequence depicted in FIG. 4 is done for convenient explanation of the multichannel screen configuration procedure of the multichannel display method. However, the present invention is not limited thereto. For example, the request inputs can be done in various orders. The first request input while the screen image indicated by the reference number 410 is displayed can be a channel down request. Of course, if no navigation request is input or channel confirmation request is input while the screen image (420) is displayed, the video data of channel N+1, presented in the main preview window is displayed in the full screen image.

As described above, the multichannel display method of the present invention shows the pictures of multiple continuous service channels in the form of preview images simultaneously displayed in response to the channel navigation request, resulting in fast channel switching.

Referring to FIG. 5, a broadcast picture of the currently selected service channel (channel N) is displayed in the full screen view as shown in screen image 510. If a channel up request is input while channel N's picture is displayed in the full screen view, the control unit 180 composes a multichannel screen with a main preview window presenting channel N+1's picture and two sub preview windows (first and second preview windows) presenting channel N's picture and channel N+2's picture (520).

If the channel up request is repeatedly input while the display unit 160 displays the multichannel screen, a channel shifting delay may occur. In this case, the control unit 180 controls such that the information on the service channels temporarily assigned to the preview windows are presented with preset thumbnail images (530). The service channel information presented in each preview window may include at least one of channel number and channel name, thereby improving channel navigation convenience.

The broadcast pictures of the respective service channels may presented with time intervals according to channel scan results as shown in the screen image indicated by the reference number 540.

While the multichannel screen 540 composed in response to the final channel navigation request is displayed, the control unit 180 determines whether a channel confirmation request is input within a preset time. If the preset time has expired or the channel confirmation request is input within the preset time, the control unit 180 controls such that the broadcast picture of the primary service channel in the full screen view as indicated by the reference number 550.

Although the multichannel screen is composed with a main preview window positioned at a left side of the screen and two sub preview windows positioned, vertically, at the right side of the screen in the above exemplary embodiments, the formation of the preview windows is not limited thereto. For example, the multichannel screen can be composed such that the sub preview windows are arranged at the top and bottom of the main preview window or on a full screen main preview window.

As shown in FIG. 6A, the preview windows are arranged in a vertical direction adaptively to the up and down behaviors of the channel switching. In FIG. 6A, the main preview window for the primary service channel (channel N) is arranged at the center of the multichannel screen in relatively large size, and the two sub preview windows for the secondary service channel (next service channel N+1 and previous service channel N-1) are arranged above and below the main preview window respectively. In FIG. 6B, the main preview window for the primary service channel (channel N) is displayed as a full screen window, and the two sub preview windows for the secondary service channel (next service channel N+1 and previous service channel N-1) are vertically arranged at the right side on the main preview window as overlay windows.

The multichannel screens depicted in FIGs. 4, 5, 6A and 6B can be customized according to the user's optional settings. Through the user settings adjustment process, the preview windows can be adjusted in size and position on the multichannel screen. Although the sizes and positions of the preview windows are set in the user setting adjustment process, the adjustments of the sizes and positions of the preview windows can be performed while the multichannel screen is displayed. The preview windows adjustment can be performed by key manipulations on the input unit while viewing the adjustment.

Also, the multichannel screen can be configured such that the presentation of the multichannel screen is automatically modified adaptively to the posture of the terminal. For example, a display mode of the display unit is changed from a portrait mode to a landscape mode with the rotation of the terminal, the multichannel screen rotates adaptively to the display mode.

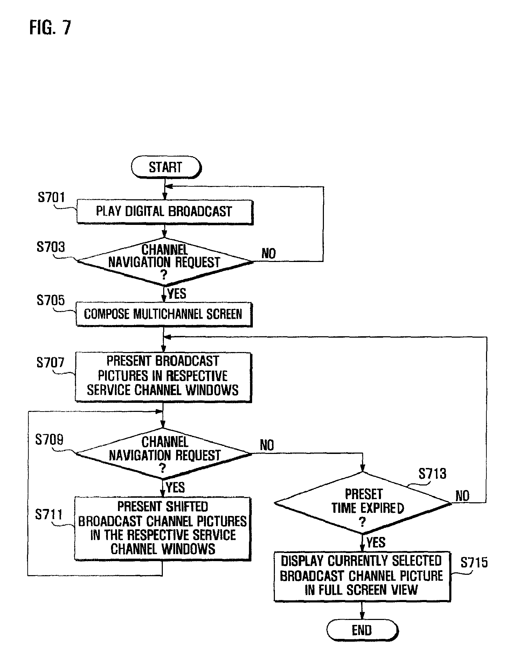

FIG. 7 is a flowchart illustrating a multichannel display method for a digital broadcast-enabled terminal according to an exemplary embodiment of the present invention.

Referring to FIG. 7, the control unit 180 controls to display a digital broadcast program in response to a broadcast playback request (S701) and determines whether a channel navigation request is input while displaying the broadcast program (S703). If a channel navigation request is input, the control unit 180 composes a multichannel screen (S705). The multichannel screen composition is performed according to settings set in the a multichannel screen option menu page on which a number of preview windows, sizes and aspect ratios of the preview windows, and positions of the preview windows are set.

After composing the multichannel screen, the control unit 180 controls such that the broadcast pictures of the service channels are presented in the respective preview windows of the multichannel screen (S707).

The multichannel screen can be configured such that two motion pictures of two service channels are presented in the two respective preview windows. Also, the multichannel screen can be configured such that a still picture captured from the broadcast data of another service channel is presented in a preview window together with the two preview windows presenting the respective motion pictures.

Also, the multichannel screen can be configured such that three pictures received through three service channels are presented in the three respective preview windows simultaneously. In this case, each picture can be a motion picture or a still picture.

While displaying the multichannel screen, the control unit 180 determines whether a channel navigation request is input (S709). If a channel navigation request is input, the control unit 180 shifts the service channels according to the channel navigation request (channel up or channel down request) and presents the pictures of the shifted channels in the respective preview windows (S711). The channels can be shifted repeatedly in response to the repeated channel navigation request inputs.

If no channel navigation request is input, the control unit determines whether a preset time has expired (S713). If the preset time has not expired, the control unit 180 repeats steps S707 and S709. In contrast, if the preset time has expired, the control unit 180 displays the picture of the currently selected service channel in the full screen view (S715).

As described above, the number of service channels to be received simultaneously can be set to 2 or 3. These two cases are described in more detail as a two channel reception mode and a three channel reception mode.

In the two channel reception mode, the currently selected service channel and one of a previous and next service channels are received and broadcast pictures of the received service channels are presented simultaneously. At this time, the multichannel screen is composed of two preview windows such that the broadcast pictures of the two received service channels are presented in the respective preview windows.

The channel navigation, in the two channel reception mode, is performed such that the picture of the next service channel indicated by the channel navigation request (i.e., channel-up request) or the picture of the previous service channel indicated by the channel navigation request (i.e., channel-down request) is presented together with the picture of the currently selected service channel. That is, a picture of the service channel indicated by the channel-up request or channel-down request is presented on the multichannel screen in addition to the currently selected service channel's picture.

The multichannel screen may be composed of three preview windows in the two channel reception mode. In this case, the third preview window may be configured to present a still picture of the last frame captured on the previous service channel.

In two channel reception mode, the additional channel to be received is determined in accordance with a channel navigation direction. Also, in a case where the same channel navigation request is input repeatedly, pictures of the next and previous channels are presented simultaneously, resulting in fast channel navigation. Also, in the two channel reception mode, the picture of the currently selected service channel is displayed in the full screen view in response to a detection of a preset event. The event comprises one of an expiration of a preset time or a channel confirmation request.

In the three channel reception mode, the currently selected service channel (channel N) and the previous and next service channels (channel N-1 and channel N+1) are received such that the pictures of the currently selected, previous, and next service channels are presented on the multichannel screen simultaneously. If a channel-up request is input, the channel N's picture is presented in the channel N-1 preview window, the channel N+1's picture is presented in the channel N preview window, and the channel N+2's picture is newly received and presented in the channel N+1 preview window. If a channel-down request is input, the channel N's picture is presented in the channel N+1 preview window, the channel N-1's picture is presented in the channel N preview window, and the channel N-2's picture is newly received and presented in the channel N-1 preview window.

In the three channel reception mode, the service channels of which pictures are presented in the corresponding preview windows are shifted quickly in response to the channel up request, a new service channel is received by the presented channel shifts. Since broadcast pictures of the three service channels are presented in the form of preview images simultaneously, the user can select a service channel without experiencing switching delay. In the three channel reception mode, the intermediate channel among the three preview channels is automatically selected to be displayed in the full screen mode if no more channel navigation request input is detected or a confirmation request is input.

Although the multichannel display method and system is described with an emphasis on video data in the above exemplary embodiments, the present invention is not limited thereto. For example, the service channel can be an audio broadcast service channel. In this case, the audio data is extracted from the broadcast data of the service channel and output in the form of a sound wave together with information on the audio service channel.

While the invention has been shown and described with reference to certain exemplary embodiments thereof, will be understood those skilled in the art that various changes in form and details may be made therein without departing from the spirit and scope of the invention, as defined in the appended claims and their equivalents.

As described above, the multichannel display method and system of the exemplary embodiments of the present invention receives two or more broadcast service channels simultaneously. Since the multiple broadcast service channels are received and pictures of the received service channels are presented simultaneously, a user can quickly navigate the service channels and select a service channel while previewing the multiple channels' pictures without experiencing a channel switching delay.

Also, the multichannel display method and system of the exemplary embodiments of the present invention provides a multichannel screen presenting pictures of multiple contiguous broadcast service channels in their respective preview windows simultaneously, resulting in fast channel navigation and fast channel selection.

Also, the multichannel display method and system of the present invention presents preview images of multiple contiguous broadcast service channels simultaneously on a single screen, whereby a user can quickly switch between the service channels while viewing the preview images without experiencing a channel switching delay.

## Claims

1. A method for outputting broadcast data in a terminal, comprising:
outputting first broadcast data received through a currently selected service channel in a broadcast playback mode;
receiving at least one second broadcast data through adjacent service channels of the currently selected service channel while outputting the first broadcast data;
composing a multichannel screen comprising a main preview window for outputting a corresponding broadcast data received through a currently selected service channel and at least one sub preview windows for outputting at least one corresponding broadcast data received through the adjacent service channels, if a channel navigation is requested; and
outputting the first broadcast data in any one of the at least one sub preview windows and any one of the at least one second broadcast data in the main preview window.

2. The method of claim 1, wherein the outputting of the broadcast data in the main preview window comprises extracting video and audio data, and the outputting of the broadcast data in the at least one sub preview windows comprises extracting video data.

3. The method of claim 2, wherein the sub preview windows designated for the adjacent service channels presents a broadcast data in the form of a still picture.

4. The method of claim 1, further comprising outputting the broadcast data being output in the main preview window in a full screen view in response to a detection of a preset event, wherein the event comprises one of an expiration of a preset time or a channel confirmation input.

5. The method of claim 1, wherein the preview windows present the broadcast data of the service channels shifted in a direction indicated by the channel navigation request, and when the channel navigation request is input again, the preview windows present the broadcast data of the service channels shifted in a direction indicated by the input channel navigation request.

6. The method of claim 1, wherein the composing of the multichannel screen comprises:
determining a number of the preview windows, positions of the preview windows, and aspect ratios of the preview windows on the basis of a previously configured multichannel screen option settings; and
creating the multichannel screen by arranging the preview windows based on the determination.

7. The method of claim 1, wherein the outputting of the broadcast data comprises:
extracting broadcast data of two service channels comprising the currently selected service channel and any one of the adjacent service channels; and
outputting the broadcast data of the two service channels in two respective preview windows comprising the main preview window and any one of the sub preview windows.

8. The method of claim 7, wherein the outputting of the broadcast data further comprises:
capturing a still picture from the broadcast data received through one of the service channels; and
presenting the still picture in another preview window excepting for the preview windows outputting the broadcast data.

9. The method of claim 7, wherein the outputting of the broadcast data further comprises:
capturing a still picture from a broadcast data received through next or previous service channel; and
presenting the still picture in another preview window excepting for the preview windows outputting the broadcast data.

10. The method of claim 1, wherein the outputting of the broadcast data comprises:
extracting broadcast data of three service channels comprising the currently selected service channel and two adjacent service channels; and
outputting the broadcast data of the three service channels in three respective preview windows comprising the main preview window and the sub preview windows.

11. The method of claim 1, further comprising outputting at least one of thumbnail image, channel number, and channel name of corresponding service channel in each preview window.

12. The method of claim 1, wherein the preview windows can be adjusted in size and position on the multichannel screen.

13. A digital broadcast apparatus of a terminal, comprising:
a digital broadcast reception unit for receiving broadcast data of a currently selected service channel and at least one adjacent service channel and for outputting the broadcast data simultaneously;
a memory unit for storing application controlling receptions of the currently selected and adjacent service channels and channel switching;
a display unit for outputting the broadcast data of the currently selected service channel and for displaying a multichannel screen comprising a plurality of preview windows outputting the broadcast data of the service channels simultaneously in response to a channel navigation request; and
a control unit for controlling the receptions of the service channels and for controlling the simultaneous outputting of the broadcast data in response to the channel navigation request.

14. The digital broadcast apparatus of claim 13, wherein the digital broadcast reception unit comprises:
a demultiplexer for demultiplexing the service channels received through at least one antenna, wherein the demultiplexer comprises a switch for shifting the service channels in response to a channel navigation request; and
at least two channel processor for decoding audio and video data from the service channels output by the demultiplexer.

15. The digital broadcast apparatus of claim 14, wherein the at least two channel processor comprises:
a first channel processor for decoding audio and video data from the broadcast data of the currently selected service channel and for outputting the audio data to an audio processing unit and outputs the video data to the display unit; and
at least one second channel processor for decoding audio and video data from the broadcast data of the at least one adjacent service channel and for outputting the video data to the display unit.
